# EUROPEAN PATENT SPECIFICATION

(11) **EP 2 117 219 B1**
(45) Date of publication and mention of the grant of the patent: **10.07.2019**
(21) Application number: 07845896.5
(22) Date of filing: 11.12.2007
(51) Int. Cl.: H04M 7/12, H04M 3/58, H04L 29/06, H04M 3/428

(54) **AN ENQUIRY DIVERSION SERVICE METHOD AND A DEVICE THEREOF**
ANFRAGEUMLENKDIENSTVERFAHREN UND EINRICHTUNG DAFÜR
PROCÉDÉ DE SERVICES DE DÉVIATION DE REQUÊTE ET DISPOSITIF CORRESPONDANT

(30) Priority: 05.01.2007 CN 200710000510
(43) Date of publication of application: 11.11.2009
(73) Proprietor: ZTE Corporation, Shenzhen, Guangdong 518057 (CN)
(72) Inventor: SHEN, Min, Guangdong 518057 (CN); WANG, Zhisong, Guangdong 5180057 (CN); LING, Wenjie, Guangdong 5180057 (CN); SHEN, Chengnian, Guangdong 5180057 (CN); ZHANG, Lu, Guangdong 5180057 (CN)
(74) Representative: Ahner, Philippe
(86) International application number: PCT/CN2007/003540
(87) International publication number: WO 2008/086690

(56) References cited:
- EP-A2- 1 094 650
- WO-A1-2006/134034
- CN-A- 1 418 424
- CN-A- 1 447 618
- CN-A- 1 822 622
- CN-A- 1 859 508
- US-A1- 2005 083 948
- US-A1- 2005 096 029
- US-A1- 2007 005 720

## Description

The present invention relates to communication field, in particular to an consultative transfer service method and an consultative transfer service apparatus for such as NGN (Next Generation Network).

### Background of the Invention

Call Transfer belongs to a supplementary service in communication systems: after two users (user A and user B) establish a call therebetween in a communication system, one user (taking user B as an example) can request to transfer the current call to a third party (user C), that is, establishing a call between user A and user C, and the call channel between user A and user B is disconnected. This service is commonly applied to this situation: the secretary (user B) of general manager answers all calls (from user A) and makes clear the intentions of said calls, and then utilizes call transfer service to transfer the calls that need to be answered by the general manager (user C) himself/herself to the general manager.

There are two types of call transfer service: one is consultative transfer, i.e. user B establishes a call with user C before transfer (inquiring whether user C agrees to make call with user A), and then initiates a transfer request to establish a call between user A and user C, and at the same time the two call channels between user B and user A and between user B and user C are disconnected, respectively; the other one is blind transfer, i.e. user B does not establish a call with user C first while directly initiates the transfer request to establish a call between user A and user C.

In NGN with IMS (IP Multimedia Subsystem) as core, the call transfer service can be completed by the intelligent terminal of users, or by the intelligent terminals in cooperation with AS (Application Server) in network.

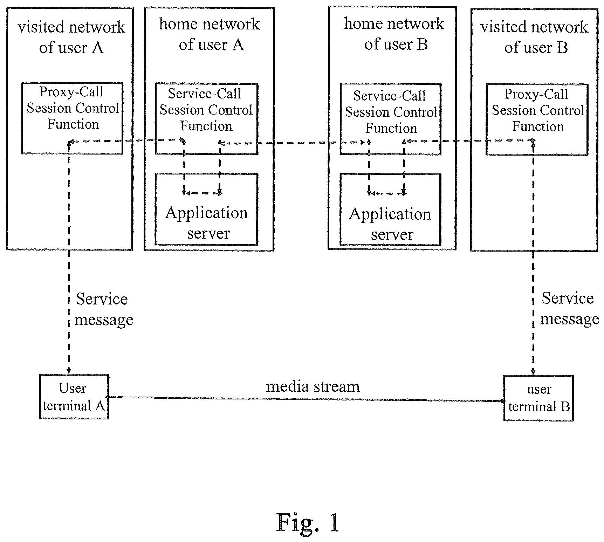

Fig.1 is a schematic view of a typical service realization architecture in NGN according to the prior technique, wherein AS is connected with S-CSCF (Service-Call Session Control Function) in the home network of user via an interface, the service message (represented with dotted line) between user terminal A and user terminal B will flow through their respective AS, and the AS can conduct various processes to the service message to realize rich services. User terminal A and user terminal B exchange and negotiate media parameters they both support using the service message, and media stream connection (represented with solid line) between them is established for transmitting data such as call voice packet.

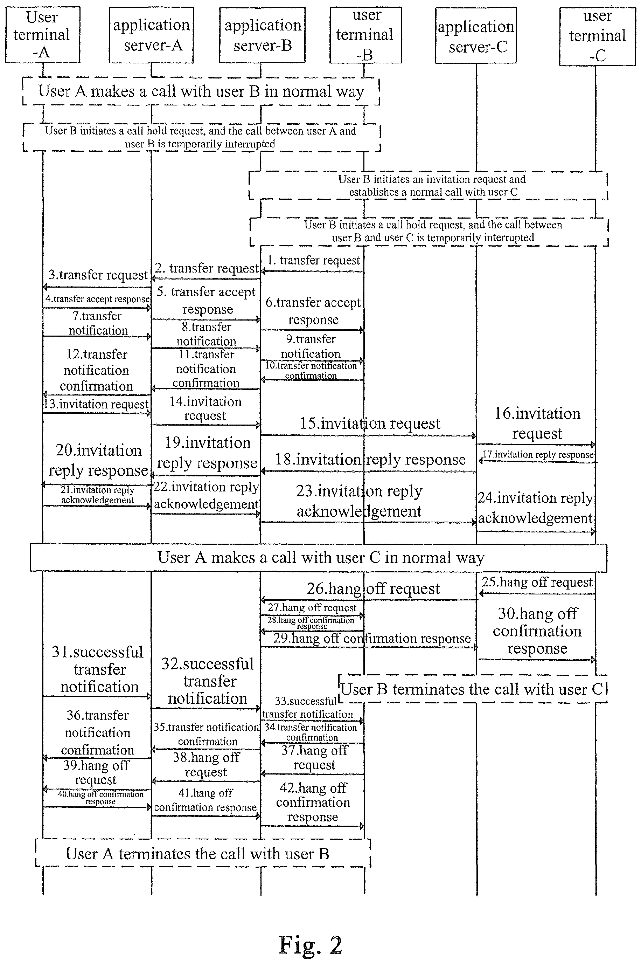

Fig.2 illustrates the signaling flowchart of the consultative transfer flow in current TISPAN (Telecommunications and Internet Converged Services and Protocols for Advanced Networking) technical specification. To be simple, network equipments such as Proxy-Call Session Control Function and Service-Call Session Control Function are omitted in Fig.2.

At the starting point of this flow, user terminal-A (user A) is making a call with user terminal-B (user B), and the application server (application server-A) of user terminal-A and the application server (application server-B) of user terminal-B both participate in this call and provide supplementary services for their respective served objects; then user terminal-B sets user terminal-A in call hold state and then initiates establishing a call channel with user terminal-C, and the application server-B and the application server (application server-C) of user terminal-C both participate in this call; then user terminal-B sets user terminal-C in call hold state, sends to user terminal-A a transfer request (steps 1-3); after user terminal-A shows the acceptance of this request (steps 4-6), user terminal-A sends an invitation request to user terminal-C (user C) (this request carries relevant signs to indicate user terminal-C to replace the call established between user terminal-B and user terminal-C), and a call is established between user terminal-A and user terminal-C (steps 13-24) ; according to the information about the signs in the invitation request, user terminal-C sends to user terminal-B a hang off request to disconnect the original call channel between user terminal-C and user terminal-B (steps 25-30); during the above process, before user terminal-A sends the invitation request to user terminal-C and when channel of user terminal-C is put through, a notification message is used to notify user terminal-B of relevant situations (corresponding to steps 7-12 and steps 31-36, respectively); and finally, user terminal-B sends a hang off request to user terminal-A to disconnect the original call channel between user terminal-A and user terminal-B (steps 37-42).

A common ground of said flows lies in that the call transfer request initiated by user B is transmitted to user A over network, user A initiates the call to the third party user C, and during this process, user A reports the call transfer progress to user B initiating the call transfer. However, this has the following problems:
(1) user terminal A must support processing the call transfer request, and needs to be able to correctly initiate the call invitation request (including setting various relevant parameters correctly) to the third party user C and correctly report the call transfer progress to user B. Call transfer is the service of user B, and it is not reasonable to have too special requirements on user terminal A.
(2) In current flows, the time for user A to invite user C, the time for user A to report the call transfer progress to user B, and the time for user B to release the original call are completely determined by the terminals themselves, so that the call transfer service depends excessively on the terminals. If the terminals comply with different specifications, this will render that users have different user experiences about the same service within the same network, thus affecting users' satisfaction with service providers. Worse still, if the user terminals do not have fine cooperation therebetween, service failure will be rendered, for example, user terminal A does not report transfer success to user terminal B, and then user terminal B will not release the original call.

In general, realization of call transfer service in the prior technique depends excessively on user terminals, which has too much limitation and hidden trouble. Hence, service providers wish to improve the control over the call transfer service.

Document WO 2006/134034 discloses a method of controlling the function feature of "SIP call transfer". In this method, SIP-user A establishes a call with SIP-user B at first, and then the SIP-user B will end the communication with SIP-user A, and SIP-user A will establish a call with SIP-user C (above process is considered as "call transfer"). During the call transfer, the SIP-user B transmits the information required by the function feature of "call transfer" to an application server (AS) in the form of "SIP : REFER to C" part of SIP protocol. After receiving the information from the SIP-user B (i.e., hope for sending a call transfer to user-C from user-A), the AS of the SIP-user A transmits an invitation without SDP data to Media Gateway Controller, MGC, (SIP end at user-C side).

From the above, it can be concluded that the AS of user-A (the device to communicate with user-C) but not AS of user-B (the device to end the communication with user-C) transmits the invitation to user-C.

### Summary of the Invention

This invention aims to provide a method and an apparatus for realising consultative transfer service controlled by application server, so as to solve the technical problems in the service flows of the prior technique of excessively dependence on user terminals thereby meet the control demand of service providers on call transfer service.

According to one aspect of this invention, a consultative transfer service method is provided, comprising the following steps: firstly, user A has established a call with user B, and then, user B establishes a call with user C and initiates a call transfer request of requesting the call with user A be transferred to user C; the application server of user B heads off the request and returns an accept response to user B; the application server of user firstly initiates a call invitation to user C, acquires the media parameter information of user C, and instructs user C to replace its call with user B; the application server of user B initiates a call re-invitation to user A, provides the media parameter information of user C, instructs user A to carry out media switch, and acquires the media parameter information of user A; the application server of user B provides the media parameter information of user A to user C, and instructs user C to establish a media stream connection with user A; and user C releases its original call with user B.

The above consultative transfer service method further comprises the following step: before initiating the call transfer request, user B first initiates call hold, and temporarily interrupts the media stream between user B and user C.

The above consultative transfer service method further comprises the following step: after user C establishes the media stream connection with user A, the application server of user B reports to user B the successful establishment of the call between user A and user C.

In the above consultative transfer service method, the step that the application server of user B heads off this request and returns the accept response to user B further comprises the following step: the application server of user B judges whether user B is authorized to initiate the call transfer according to the service registration information of user B, and if user B is not authorized, the application server returns a refuse response to user B.

The above consultative transfer service method further comprises the following step: after user C establishes the media stream connection with user A, the application server of user B instructs user B to hang off and terminate the original call between user A and user B.

According to another aspect of this invention, a consultative transfer service apparatus is provided, including: a first module for first establishing a call between user A and user B, and then making user B establish a call with user C and initiate a call transfer request of requesting to transfer the call with user A to user C; a second module for making the application server of user B head off the request and return an accept response to user B; a third module for making the application server of user B firstly initiate a call invitation to user C, acquire the media parameter information of user C, and instructs user C to replace its call with user B; a fourth module for making the application server of user B initiate a call re-invitation to user A, provide the media parameter information of user C, instruct user A to carry out media switch, and acquire the media parameter information of user A; a fifth module for making the application server of user B provide the media parameter information of user A to user C, and instruct user C to establish a media stream connection with user A; and a sixth module for making user C release the original call with user B.

Owing to the above mentioned, according to the method of this invention, application server is used to realize consultative transfer service, and the application server controls the times to invite a third party user, to report transfer progress to user, and to release the original call, and the transferred user terminal does not need to support the call transfer request, thereby greatly reducing the dependence of this service on user terminals and thus fully meeting the control demand of service providers on the call transfer service.

Other characteristics and advantages of the present invention will be described in the following specification, and will be apparent partly from the specification and embodiments of the present invention. The objects and other advantages can be realized and obtained through the structure of the specification, claims, and the drawings.

### Brief Description of the Drawings

The drawings in the specification provide a further understanding to the present invention and constitute a part of the application. The exemplary embodiments of the present invention and the explanation thereof are given thereafter by way of illustration only, and thus are not limitative of the present invention, and wherein:
Fig.1 is a schematic view of a typical service realization architecture in NGN according to the prior technique;
Fig.2 is a signaling flowchart of the consultative transfer flow in current TISPAN technical specification;
Fig.3 is a flowchart of the consultative transfer service method according to the embodiment of the present invention; and
Fig.4 is a signaling flowchart of the consultative call transfer flow according to a preferred embodiment of this invention.

### Detailed Description

The present invention will be detailed hereinafter in connection with the embodiments of the present invention and reference will be made to the drawings, if not conflict, the embodiments and the technical features of the embodiments can be combined with each other.

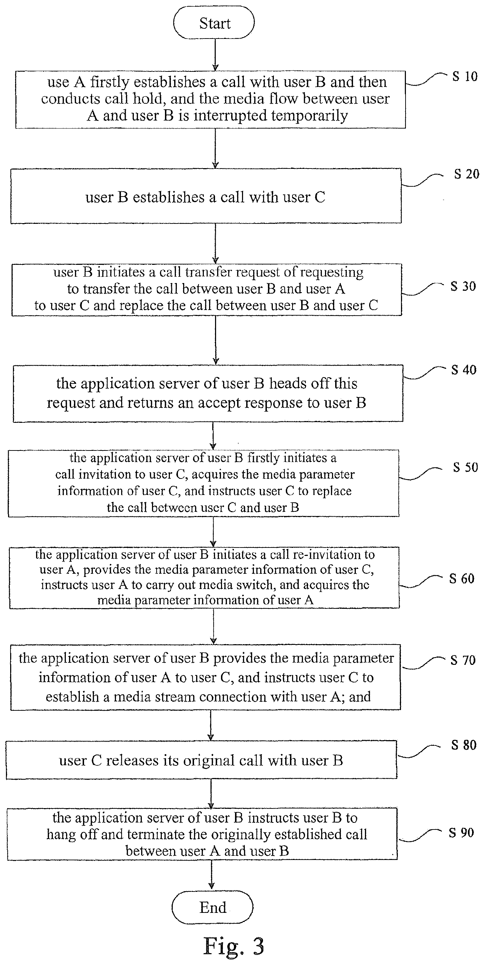

Fig.3 is a flowchart of the consultative transfer service method according to the embodiment of this invention, comprising the following steps:
Step 10, use A first establishes a call with user B and then conducts call hold, and the media flow between user A and user B is interrupted temporarily;
Step 20, user B establishes a call with user C;
Step 30, user B initiates a call transfer request of requesting to transfer its call with user A to user C and replacing its call with user C;
Step 40, the application server of user B heads off this request and returns an accept response to user B;
Step 50, the application server of user B firstly initiates a call invitation to user C, acquires the media parameter information of user C, and instructs user C to replace its call with user B;
Step 60, the application server of user B initiates a call re-invitation to user A, provides the media parameter information of user C, instructs user A to carry out media switch, and acquires the media parameter information of user A;
Step 70, the application server of user B provides the media parameter information of user A to user C, and instructs user C to establish a media stream connection with user A; and
Step 80, user C releases its original call with user B.

In addition, the consultative transfer service method can further include the following step:
Step 90, after user C establishes the media stream connection with user A, the application server of user B instructs user B to hang off and terminate the originally established call between user A and user B.

Furthermore, the above method can further comprise the following step: before user B establishes the call with user C, user B first conducts call hold to the call between user A and user B, and temporarily interrupts the media stream between user A and user B; before originating the call transfer request, user B first initiates call hold, and temporarily interrupts the media stream between user B and user C.

Furthermore, the above method can further comprise the following step: after user C establishes the media stream connection with user A, the application server of user B reports to user B the successful establishment of the call between user A and user C.

Furthermore, the above method can further comprise the following step: before initiating the call invitation to user C, the application server of user B reports to user B that the call transfer is being processed.

Furthermore, the above method can further have the following feature: at step 40, the application server of user B judges whether user B is authorized to initiate the call transfer according to the service registration information of user B, and if user B is not authorized, the application server returns a refuse response to user B.

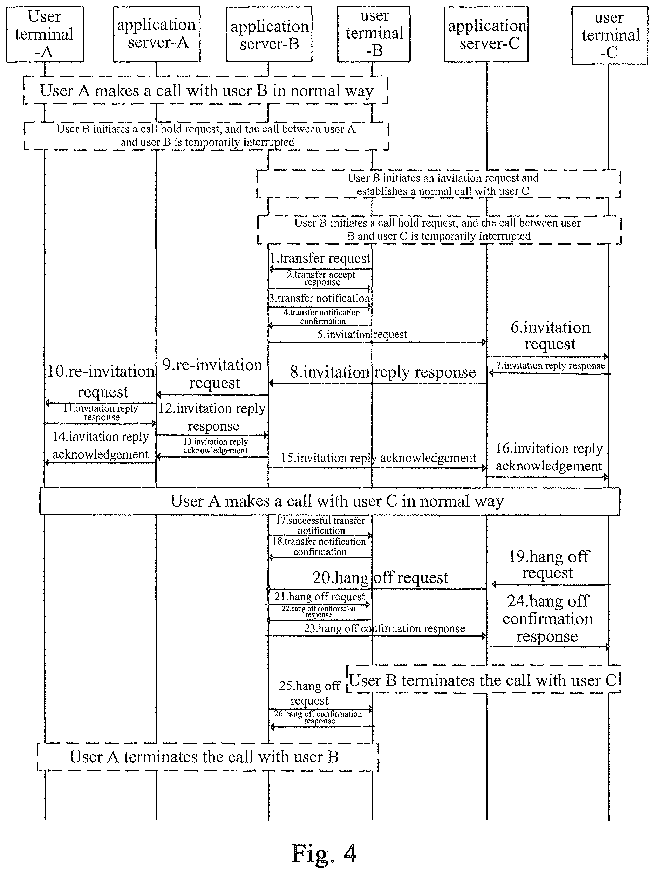

The present invention will be detailed hereinafter in conjunction with the preferred embodiment thereof and Fig.4.

Fig.4 is a signaling flowchart of the consultative call transfer flow according to a preferred embodiment of this invention (to be simple, network equipments such as Proxy-Call Session Control Function and Service-Call Session Control Function are omitted in Fig.4). Compared with Fig.2, main improvements are described as follows: the call transfer request sent by user terminal-B to user terminal-A is headed off by application server-B (which provides services for user B), and application server-B confirms with user terminal-B accepting the transfer request; then application server-B sends an invitation request to user terminal-C, and after user terminal-C answers the invitation request, application server-B sends to user terminal-A a re-invitation request, modifies the media stream parameter information of user terminal-A, and conducts media switch, so that a call is established between user terminal-A and user terminal-C; and finally, the application server sends a hang off request to user terminal-B, and disconnects the call connection between user terminal-A and user terminal-B. User terminal-C is still responsible for initiating releasing the original call between user terminal-B and user terminal-C. This embodiment includes the following steps:
1) Through a certain operation, user B makes user terminal-B send a call transfer request to application serve-B and request to transfer the call to user C; wherein the request carries a parameter which can indicate the call connection established between user B and user C.
2) Application serve-B sends to user B a call transfer accept response which shows that the request has been accepted;
3) Application serve-B sends to user B a transfer notification message which shows that it is preparing to initiate a call to user C.
4) User B returns a confirmation response to application server-B.
5-6) Application server-B initiates an invitation request to user C, wherein the request carries a parameter which can indicate the call connection established between user B and user C.
7-8) User terminal-C returns a successful reply response which carries the media parameter information it supports.
9-10) Application server-B sends to user terminal-A a re-invitation request, and provides the media parameter information of user terminal-C to user terminal-A for user terminal-A to conduct media stream switch.
11-12) User terminal-A returns a successful reply response which carries the media parameter information it supports.
13-14) Application server-B acknowledges the reply of the user terminal-A.
15-16) Application server-B acknowledges the reply of the user terminal-C, and provides the media parameter information of user terminal-A to user terminal-C for successfully establishing the media stream connection between user terminal-C and user terminal-A, and then user A can normally make a call with user C.
17) Application server-B sends a transfer notification message to user B, representing that the call between user A and user C has been established.
18) User B returns a confirmation response to application server-B.
19-21) According to the parameter, carried in the invitation request message at step 6, which can indicate the call connection has been established between user B and user C, user C sends a hang off request to user B.
22-24) User B returns a confirmation response and releases the original call with user C.
25) Application server-B sends a hang off request to user B.
26) User B returns a confirmation response to application server-B and releases the original call with user A.

This invention further provides a consultative transfer service apparatus, including: a first module for first establishing a call between user A and user B, and then making user B establish a call with user C and initiate a call transfer request of requesting to transfer the call with user A to user C; a second module for making the application server of user B head off the request and return an accept response to user B; a third module for making the application server of user B firstly initiate a call invitation to user C, acquire the media parameter information of user C, and instructs user C to replace its call with user B; a fourth module for making the application server of user B initiate a call re-invitation to user A, provide the media parameter information of user C, instruct user A to carry out media switch, and acquire the media parameter information of user A; a fifth module for making the application server of user B provide the media parameter information of user A to user C, and instruct user C to establish a media stream connection with user A; and a sixth module for making user C release the original call with user B.

The above consultative transfer service apparatus can further include a seventh module for making the application server of user B instruct user B to hang off and terminate the originally established call between user A and user B after user C establishes the media stream connection with user A.

The above consultative transfer service apparatus can further include an eighth module for making user B first conduct call hold to the call between user A and user B and temporarily interrupting the media stream between user A and user B, before user B establishes the call with user C; and for making user B first initiate call hold and temporarily interrupt the media stream between user B and user C before user B initiates the call transfer request.

The above consultative transfer service apparatus can further include a ninth module for making the application server of user B report to user B the successful establishment of the call between user A and user C after user C establishes the media stream connection with user A.

The above consultative transfer service apparatus can further include a tenth module for making the application server of user B report to user B that the call transfer is being processed before the application server of user B initiates the call invitation to user C.

In the above consultative transfer service apparatus, the second module can further be used for making the application server of user B judge whether user B is authorized to initiate the call transfer according to the service registration information of user B, and if user B is not authorized, the application server returns a refuse response to user B.

Owing to the above mentioned, according to this invention, application server is used to realize consultative transfer service, and the application server controls the times to invite a third party user, to report transfer progress to user, and to release the original call, and the transferred user terminal does not need to support the call transfer request, thereby greatly reducing the dependence of this service on user terminals and thus fully meeting the control demand of service providers on the call transfer service.

Obviously, one skilled in the art shall understand that various modules and steps above can be realized with general computing devices and can be integrated into one single computing device or distributed within a network consisting of multiple computing devices, and alternatively, the various modules and steps above can be realized with the program codes executable by the computing devices, and thus these program codes can be stored in memory devices so as to be executed by the computing devices, or the various modules and steps above can be formed into individual integrated circuit modules, or a plurality of the modules or steps can be formed into a single integrated circuit module so as to be realized. Therefore, the present invention is not limited to any particular hardware or software combination. It should be understood that alterations of the embodiments are apparent to one skilled in the art and do not depart from the scope of the present invention.

The descriptions above are only preferable embodiments of the present invention and are not intended to restrict the present invention. For those skilled in the art, the present invention may have various changes and variations. Any amendments, equivalent substitutions, improvements etc. within the principle of the present invention are all concluded in the scope of protection of the present invention.

## Claims

1. A consultative transfer service method, comprising the steps of:
firstly, user A establishes (S10) a call with user B, and then, user B establishes (S20) a call with user C and initiates (S30) a call transfer request of requesting to transfer its call with user A to user C;
the application server of user B heads off (S40) the request and returns an accept response to user B;
the application server of user B firstly initiates (S50) a call invitation to user C, acquires a media parameter information of user C, and instructs user C to replace the call between user C and user B;
the application server of user B initiates (S60) a call re-invitation to user A, provides the media parameter information of user C, instructs user A to carry out media switch, and acquires a media parameter information of user A;
the application server of user B provides (S70) the media parameter information of user A to user C, and instructs user C to establish a media stream connection with user A; and
user C releases (S80) the original call between user C and user B.

2. The consultative transfer service method according to claim 1, further comprising the following step (S10):
before user B establishes the call with user C, user B firstly conducts call hold to the call between user A and user B, and temporarily interrupts the media stream between user A and user B; before initiating the call transfer request, user B firstly initiates call hold, and temporarily interrupts the media stream between user B and user C.

3. The consultative transfer service method according to claim 1, further comprising the following step:
after user C establishes the media stream connection with user A, the application server of user B reports to user B the successful establishment of the call between user A and user C.

4. The consultative transfer service method according to claim 1, wherein the step that the application server of user B heads off this request and returns the accept response to user B further comprises the following step (S40):
the application server of user B judges whether user B is authorized to initiate the call transfer according to the service registration information of user B, and if user B is not authorized, the application server returns a refuse response to user B.

5. The consultative transfer service method according to claim 1, further comprising the following step (S90):
after user C establishes the media stream connection with user A, the application server of user B instructs user B to hang up and terminate the originally established call between user A and user B.

6. A consultative transfer service apparatus, comprising:
a first module for first establishing a call between user A and user B, and then, making user B establish a call with user C and initiate a call transfer request of requesting to transfer its call with user A to user C;
a second module for making the application server of user B head off the request and return an accept response to user B;
a third module for making the application server of user B firstly initiate a call invitation to user C, acquire a media parameter information of user C, and instructs user C to replace the call between user C and user B;
a fourth module for making the application server of user B initiate a call re-invitation to user A, provide the media parameter information of user C, instruct user A to carry out media switch, and acquire a media parameter information of user A;
a fifth module for making the application server of user B provide the media parameter information of user A to user C, and instruct user C to establish a media stream connection with user A; and
a sixth module for making user C release the original call between user C and user B.

7. The consultative transfer service apparatus according to claim 6, further comprising:
an eighth module for making user B, before user B establishes the call with user C, firstly conduct call hold to the call between user A and user B and temporarily interrupts the media stream between user A and user B; and for making user B, before user B initiates the call transfer request, firstly initiate call hold and temporarily interrupt the media stream between user B and user C.

8. The consultative transfer service apparatus according to claim 6, further comprising:
a ninth module for making the application server of user B, after user C establishes the media stream connection with user A, report to user B the successful establishment of the call between user A and user C.

9. The consultative transfer service apparatus according to claim 6, wherein the second module can further be used for making the application server of user B judge whether user B is authorized to initiate the call transfer according to the service registration information of user B, and if user B is not authorized, the application server returns a refuse response to user B.

10. The consultative transfer service apparatus according to claim 6, further comprising:
a seventh module for making the application server of user B, after user C establishes the media stream connection with user A, instruct user B to hang up and terminate the originally established call between user A and user B.

## Patentansprüche

1. Konsultatives Übertragungsdienstverfahren mit den Schritten:
zunächst stellt ein Nutzer A einen Anruf mit einem Nutzer B her (S10), und dann stellt der Nutzer B einen Anruf mit einem Nutzer C her (S20) und initiiert (S30) eine Anrufübertragungsanfrage zum Anfragen einer Übertragung seines Anrufes mit dem Nutzer A an den Nutzer C;
der Anwendungsserver des Nutzers B fängt die Anfrage ab (S40) und gibt eine Annahmeantwort an den Nutzer B zurück;
der Anwendungsserver des Nutzers B initiiert (S50) zunächst eine Anrufeinladung an den Nutzer C, akquiriert Medienparameterinformationen des Nutzers C und instruiert den Nutzer C, den Anruf zwischen dem Nutzer C und dem Nutzer B zu ersetzen;
der Anwendungsserver des Nutzers B initiiert (S60) eine erneute Anrufeinladung an den Nutzer A, stellt die Medienparameterinformationen des Nutzers C bereit, instruiert den Nutzer A, ein Medienumschalten auszuführen, und akquiriert Madienparameterinformationen des Nutzers A;
der Anwendungsserver des Nutzers B stellt die Medienparameterinformationen des Nutzers A dem Nutzer C bereit (S70), und instruiert den Nutzer C, eine Medienstromverbindung mit dem Nutzer A herzustellen; und
der Nutzer C gibt den ursprünglichen Anruf zwischen dem Nutzer C und dem Nutzer B frei (S80).

2. Konsultatives Übertragungsdienstverfahren nach Anspruch 1, ferner mit dem folgenden Schritt (S10):
bevor der Nutzer B den Anruf mit dem Nutzer C herstellt, führt der Nutzer B zunächst ein Anrufhalten bezüglich des Anrufs zwischen dem Nutzer A und dem Nutzer B durch und unterbricht zeitweilig den Medienstrom zwischen dem Nutzer A und dem Nutzer B; bevor die Anrufübertragungsanfrage initiiert wird, initiiert der Nutzer B zunächst ein Anrufhalten und unterbricht zeitweilig den Medienstrom zwischen dem Nutzer B und dem Nutzer C.

3. Konsultatives Übertragungsdienstverfahren nach Anspruch 1, ferner mit dem folgenden Schritt:
nachdem der Nutzer C die Medienstromverbindung mit dem Nutzer A hergestellt hat, meldet der Anwendungsserver des Nutzers B dem Nutzer B die erfolgreiche Herstellung des Anrufs Zwischen dem Nutzer A und dem Nutzer C.

4. Konsultatives Übertragungsdienstverfahren nach Anspruch 1, wobei der Schritt, dass der Anwendungsserver des Nutzers B diese Anfrage abfängt und die Annahmeantwort an den Nutzer B zurückgibt, ferner den folgenden Schritt (S40) aufweist:
der Anwendungsserver des Nutzers B beurteilt gemäß den Dienstregistrierungsinformationen des Nutzers B, ob der Nutzer B autorisiert ist, um die Anrufübertragung zu initiieren, und falls der Nutzer B nicht autorisiert ist, gibt der Anwendungsserver eine Ablehnungsantwort an den Nutzer B zurück.

5. Konsultatives Übertragungsdienstverfahren nach Anspruch 1, ferner mit dem folgenden Schritt (S90):
nachdem der Nutzer C die Medienstromverbindung mit dem Nutzer A hergestellt hat, instruiert der Anwendungsserver des Nutzers B den Nutzer B, aufzulegen und den ursprünglich hergestellten Anruf zwischen dem Nutzer A und dem Nutzer B zu beenden.

6. Konsultative Übertragungsdienstvorrichtung, aufweisend:
ein erstes Modul zum ersten Herstellen eines Anrufs zwischen einem Nutzer A und einem Nutzer B, und dann Bewirken, dass der Nutzer B einen Anruf mit einem Nutzer C herstellt und eine Anrufübertragungsanfrage zum Anfragen einer Übertragung seines Anrufs mit dem Nutzer A an den Nutzer C initiiert;
ein zweites Modul zum Bewirken, dass der Anwendungsserver des Nutzers B die Anfrage abfängt und eine Annahmeantwort an den Nutzer B zurückgibt;
ein drittes Modul zum Bewirken, dass der Anwendungsserver des Nutzers B zunächst eine Anrufeinladung an den Nutzer C initiiert, Medienparameterinformationen des Nutzers C akquiriert und den Nutzer C instruiert, den Anruf zwischen dem Nutzer C und dem Nutzer B zu ersetzen;
ein viertes Modul zum Bewirken, dass der Anwendungsserver des Nutzers B eine erneute Anrufeinladung an den Nutzer A initiiert, die Medienparameterinformationen des Nutzers C bereitstellt, den Nutzer A instruiert, ein Medienumschalten auszuführen, und Medienparameterinformationen des Nutzers A akquiriert;
ein fünftes Modul zum Bewirken, dass der Anwendungsserver des Nutzers B die Medienparameterinformationen des Nutzers A dem Nutzer C bereitstellt, und den Nutzer C instruiert, eine Medienstromverbindung mit dem Nutzer A herzustellen; und
ein sechstes Modul zum Bewirken, dass der Nutzer C den ursprünglichen Anruf zwischen dem Nutzer C und dem Nutzer B freigibt.

7. Konsultative Übertragungsdienstvorrichtung nach Anspruch 6, ferner aufweisend:
ein achtes Modul zum Bewirken, dass der Nutzer B, bevor der Nutzer B den Anruf mit dem Nutzer C herstellt, zunächst, ein Anrufhalten bezüglich des Anrufs zwischen dem Nutzer A und dem Nutzer B durchführt, und den Medienstrom zwischen dem Nutzer A und dem Nutzer B zeitweilig unterbricht; und zum Bewirken, dass der Nutzer B, bevor der Nutzer B die Anrufübertragungsanfrage initiiert, zunächst ein Anrufhalten initiiert und den Medienstrom zwischen dem Nutzer B und dem Nutzer C zeitweilig unterbricht.

8. Konsultative Übertragungsdienstvorrichtung nach Anspruch 6, ferner aufweisend:
ein neuntes Modul zum Bewirken, dass der Anwendungsserver des Nutzers B, nachdem der Nutzer C die Medienstromverbindung mit dem Nutzer A hergestellt hat, dem Nutzer B die erfolgreiche Herstellung des Anrufs zwischen dem Nutzer A und dem Nutzer C meldet.

9. Konsultative Übertragungsdienstvorrichtung nach Anspruch 6, wobei das zweite Modul ferner verwendet werden kann, um zu bewirken, dass der Anwendungsserver des Nutzers B gemäß den Dienstregistrierungsinformationen des Nutzers B beurteilt, ob der Nutzer B autorisiert ist, um die Anrufübertragung zu initiieren, und falls der Nutzer B nicht autorisiert ist, der Anwendungsserver eine Ablehnungsantwort an den Nutzer B zurückgibt.

10. Konsultative Übertragungsdienstvorrichtung nach Anspruch 6, ferner aufweisend:
ein siebtes Modul zum Bewirken, dass der Anwendungsserver des Nutzers B, nachdem der Nutzer C die Medienstromverbindung mit dem Nutzer A hergestellt hat, den Nutzer B instruiert, aufzulegen und den ursprünglich hergestellten Anruf zwischen dem Nutzer A und dem Nutzer B zu beenden.

## Revendications

1. Procédé de service de transfert consultatif, qui comprend les étapes :
tout d'abord, un utilisateur A établit (S10) un appel avec un utilisateur B, puis l'utilisateur B établit (S20) un appel avec un utilisateur C et déclenche (S30) une requête de transfert d'appel pour demander le transfert de son appel avec l'utilisateur A vers l'utilisateur C ;
le serveur d'application de l'utilisateur B dévie (S40) la requête et renvoie une réponse d'acceptation à l'utilisateur B ;
le serveur d'application de l'utilisateur B lance tout d'abord (S50) une invitation d'appel vers l'utilisateur C, acquiert des informations de paramètres de média de l'utilisateur C, et demande à l'utilisateur C de remplacer l'appel entre l'utilisateur C et l'utilisateur B ;
le serveur d'application de l'utilisateur B lance (S60) une réinvitation d'appel vers l'utilisateur A, fournit les informations de paramètres de média de l'utilisateur C, demande à l'utilisateur A d'effectuer un changement de média, et acquiert les informations de paramètres de média de l'utilisateur A ;
le serveur d'application de l'utilisateur B fournit (S70) les informations de paramètres de média de l'utilisateur A à l'utilisateur C, et demande à l'utilisateur C d'établir une connexion de flux média avec l'utilisateur A ; et
l'utilisateur C libère (S80) l'appel d'origine entre l'utilisateur C et l'utilisateur B.

2. Procédé de service de transfert consultatif selon la revendication 1, qui comprend en outre l'étape suivante (S10) :
avant que l'utilisateur B établisse l'appel avec l'utilisateur C, l'utilisateur B met tout d'abord en attente l'appel entre l'utilisateur A et l'utilisateur B, et interrompt temporairement le flux média entre l'utilisateur A et l'utilisateur B ; avant de déclencher la requête de transfert d'appel, l'utilisateur B lance tout d'abord la mise en attente d'appel, et interrompt temporairement le flux média entre l'utilisateur B et l'utilisateur C.

3. Procédé de service de transfert consultatif selon la revendication 1, qui comprend en outre l'étape suivante :
une fois que l'utilisateur C a établi la connexion de flux média avec l'utilisateur A, le serveur d'application de l'utilisateur B signale à l'utilisateur B la réussite de l'établissement de l'appel entre l'utilisateur A et l'utilisateur C.

4. Procédé de service de transfert consultatif selon la revendication 1, dans lequel l'étape à laquelle le serveur d'application de l'utilisateur B dévie cette requête et renvoie la réponse d'acceptation à l'utilisateur B comprend en outre l'étape suivante (S40) :
le serveur d'application de l'utilisateur B juge si l'utilisateur B est autorisé à lancer le transfert d'appel selon les informations d'enregistrement de service de l'utilisateur B, et, si l'utilisateur B n'est pas autorisé, le serveur d'application renvoie une réponse de refus à l'utilisateur B.

5. Procédé de service de transfert consultatif selon la revendication 1, qui comprend en outre l'étape suivante (S90) :
une fois que l'utilisateur C a établi la connexion de flux média avec l'utilisateur A, le serveur d'application de l'utilisateur B demande à l'utilisateur B de raccrocher et de mettre fin à l'appel établi à l'origine entre l'utilisateur A et l'utilisateur B.

6. Appareil de service de transfert consultatif, qui comprend :
un premier module destiné à établir tout d'abord un appel entre un utilisateur A et un utilisateur B, puis à faire que l'utilisateur B établisse un appel avec l'utilisateur C et déclenche une requête de transfert d'appel pour demander le transfert de son appel avec l'utilisateur A vers l'utilisateur C ;
un second module destiné à ce que le serveur d'application de l'utilisateur B dévie la requête et renvoie une réponse d'acceptation à l'utilisateur B ;
un troisième module destiné à faire que le serveur d'application de l'utilisateur B envoie tout d'abord une invitation d'appel à l'utilisateur C, acquière les informations de paramètres de média de l'utilisateur C, et demande à l'utilisateur C de remplacer l'appel entre l'utilisateur C et l'utilisateur B ;
un quatrième module destiné à faire que le serveur d'application de l'utilisateur B envoie une réinvitation d'appel à l'utilisateur A, fournisse les informations de paramètres de média de l'utilisateur C, demande à l'utilisateur A d'effectuer un changement de média, et acquière les informations de paramètres de média de l'utilisateur A ;
un cinquième module destiné à faire que le serveur d'application de l'utilisateur B fournisse les informations de paramètres de média de l'utilisateur A à l'utilisateur C, et demande à l'utilisateur C d'établir une connexion de flux média avec l'utilisateur A ; et
un sixième module destiné à faire que l'utilisateur C libère l'appel d'origine entre l'utilisateur C et l'utilisateur B.

7. Appareil de service de transfert consultatif selon la revendication 6, qui comprend en outre :
un huitième module destiné à faire que l'utilisateur B, avant que l'utilisateur B établisse l'appel avec un utilisateur C, mette tout d'abord en attente l'appel entre l'utilisateur A et l'utilisateur B et interrompe temporairement le flux média entre l'utilisateur A et l'utilisateur B ; et à faire que l'utilisateur B, avant que l'utilisateur B déclenche la requête de transfert d'appel, lance tout d'abord la mise en attente de l'appel et interrompe temporairement le flux média entre l'utilisateur B et l'utilisateur C.

8. Appareil de service de transfert consultatif selon la revendication 6, qui comprend en outre :
un neuvième module destiné à faire que le serveur d'application de l'utilisateur B, après que l'utilisateur C a établi la connexion de flux média avec l'utilisateur A, signale à l'utilisateur B la réussite de l'établissement de l'appel entre l'utilisateur A et l'utilisateur C.

9. Appareil de service de transfert consultatif selon la revendication 6, dans lequel le second module peut en outre être utilisé pour faire que le serveur d'application de l'utilisateur B juge si l'utilisateur B est autorisé à lancer le transfert d'appel selon les informations d'enregistrement de service de l'utilisateur B, et, si l'utilisateur B n'est pas autorisé, le serveur d'application renvoie une réponse de refus à l'utilisateur B.

10. Appareil de service de transfert consultatif selon la revendication 6, qui comprend en outre :
un septième module destiné à faire que le serveur d'application de l'utilisateur B, après que l'utilisateur C a établi la connexion de flux média avec l'utilisateur A, demande à l'utilisateur B de raccrocher et de mettre fin à l'appel établi à l'origine entre l'utilisateur A et l'utilisateur B.
